# EUROPÄISCHE PATENTANMELDUNG

(11) **EP 2 584 640 A1**
(43) Veröffentlichungstag der Anmeldung: **24.04.2013**
(21) Anmeldenummer: 11186187.8
(22) Anmeldetag: 21.10.2011
(51) Int. Cl.: H01M 8/24, H01M 8/00

(54) **Aufnahmegestell mit Brennstoffzellendruckbehälter**

(71) Anmelder: Siemens Aktiengesellschaft, 80333 München (DE); Howaldtswerke-Deutsche Werft GmbH, 24143 Kiel (DE)
(72) Erfinder: Bärnreuther, Frank, 90419 Nürnberg (DE); Dörfler, Stefan, 90513 Zirndorf (DE); Hoffmann, Dr. Joachim, 90559 Burgthann (DE); Mattejat, Dr. Arno, 91056 Erlangen (DE); Pommer, Hans, 24360 Barkelsby (DE)
(74) Vertreter: Maier, Daniel Oliver

(57) **Zusammenfassung**

Die Erfindung geht aus von einem Aufnahmegestell (20) mit einem durch eine Aufnahmevorrichtung (21) in dem Aufnahmegestell (20) aufgenommenen Brennstoffzellendruckbehälter (1).

Um durch Druckerhöhungen in dem Brennstoffzellendruckbehälter (1) Schädigungen desselben zu verhindern, sieht die Aufnahmevorrichtung (21) verstellbare Anschlagelemente (22) vor, welche an dem Aufnahmegestell (20) derart verstellbar angeordnet sind, dass durch deren Verstellung (25) jeweils ein vorgebbarer Abstand (23) des jeweiligen Anschlagelements (22) zu einer Seitenwand (5, 6, 7, 8) des Brennstoffzellendruckbehälters (1) einstellbar ist und bei einem Kontakt (27, 29) des Anschlagelements (22) mit der Seitenwand (5, 6, 7, 8) eine durch einen Druck in dem Brennstoffzellendruckbehälter (1) bewirkbare Verformung (24) der Seitenwand (5, 6, 7, 8) blockiert wird.

## Beschreibung

Die Erfindung betrifft ein Aufnahmegestell mit einem durch eine Aufnahmevorrichtung in dem Aufnahmegestell aufgenommenen Brennstoffzellendruckbehälter.

Eine Brennstoffzelle ist eine galvanische Zelle, die eine chemische Reaktionsenergie eines kontinuierlich zugeführten Brennstoffes und eines Oxidationsmittels in elektrische Energie wandelt. Üblich sind Wasserstoff-Sauerstoff-Brennstoffzellen, bei welchen zugeführter Wasserstoff (Brennstoff, Betriebsgas) und Sauerstoff (Oxidationsmittel, Betriebsgas) an einem Elektrolyten unter Abgabe von Wärme zu der elektrischer Energie reagieren. Auch Brennstoffzellen mit anderen Brennstoffen, wie Methan, Methanol, Ethan oder Ethanol, und anderen Oxidationsmitteln, wie Luft(-Sauerstoff), sind bekannt.

Die dabei durch eine Brennstoffzelle erzeugte elektrische Energie kann einem Verbraucher, wie einem elektrischen Motor, zur Verrichtung von Arbeit zu geführt werden.

Üblicherweise werden die Betriebsgase, wie der Wasser- und der Sauerstoff, der Brennstoffzelle unter Druck, in der Regel unter 3 bar abs (bar abs: Absolutdruck), beispielsweise zwischen 1,05 bar abs und 2,5 bar abs, zugeführt, so dass sich in der Brennstoffzelle ein entsprechend hoher Innendruck aufbaut.

Um ein Austreten der zündfähigen bzw. brennbaren Betriebsgase, beispielsweise im Fall eines Lecks an der Brennstoffzelle, aus der Brennstoffzelle zu verhindern, werden (Brennstoffzellen-)Druckbehälter vorgesehen, in welchen die Brennstoffzellen - dort unter einem Schutzgasmantel - angeordnet werden (Schutzkonzept).

Dazu wird dem Druckbehälter, in der Regel ein hohler dreidimensionaler, Blechwände aufweisender Körper, beispielsweise eine Tonne oder ein quaderförmiger bzw. im Querschnitt rechteckiger Behälter, Schutzgas, wie Stickstoff, unter einem den Betriebsgasdruck - mit entsprechender Sicherheitsreserve - übersteigenden Druck, beispielsweise bis zu 4 bar abs, zugeführt. Das unter diesem den Betriebsgasdruck übersteigendem Druck stehende Schutzgas bildet um die Brennstoffzelle eine Schutzgashülle, ähnlich einer Druckbarriere, aus und verhindert damit ein Überströmen bzw. ein Ausströmen der Betriebsgase in eine Umgebung der Brennstoffzelle.

Der in dem Druckbehälter dadurch aufgebaute und auf die Wände des Druckbehälters wirkende Innendruck wird über eine entsprechende (Dicken-)Dimensionierung der Druckbehälterwände aufgefangen, um dadurch innendruckbedingte, durch Spannungen hervorrufbare Verformung der Wände und in weiterer Folge mögliche Risse o. ä. in den Wänden des Druckbehälters zu verhindern.

Brennstoffzellen, wie eine PEM-Brennstoffzelle (Proton Exchange Membrane-Brennstoffzelle oder Polymer Elektrolyt Membrane-Brennstoffzelle), sind beispielsweise aus http://de.wikipedia.org/wiki/Brennstoffzelle (erhältlich am xx) bekannt.

Ferner sind Brennstoffzellen im stationären und auch mobilen Einsatz bekannt, beispielsweise bei einem Krankenhaus zur Notenergieversorgung oder in einem Fahrzeug, wie einem Kraftfahrzeug oder einem Schiff oder einem U-Boot. Hier wird die Brennstoffzelle in der Regel zur elektrischen Versorgung von das Fahrzeug antreibenden E-Motoren verwendet.

Um insbesondere im mobilen Einsatz einer solchen Brennstoffzelle dieser bzw. dem die Brennstoffzelle aufnehmenden Druckbehälter sicheren Halt - beispielsweise vor Verrutschen - zu geben, werden Aufnahmegestelle, wie so genannte Brennstoffzellen(-einschub-)regale, kurz Brennstoffzellenracks (BZ-Racks) oder nur Racks, verwendet, in welche der Druckbehälter inklusive der in ihm aufgenommenen Brennstoffzelle (zusammen im Folgenden nur als Brennstoffzellenmodul bezeichnet) eingeschoben - und damit sicher gehalten bzw. verstaut werden.

Es ist wünschenswert, Brennstoffzellen mit erhöhten Betriebsgasdrücken, beispielsweise von über 3 bar abs, beispielsweise ca. 3,5 bar abs oder ca. 4,0 bar abs, zu betreiben, um so periphere Einrichtungen einer Brennstoffzelle, wie Druckminderer und/oder Überwachungseinrichtungen, in deren optimalen Arbeitsbereichen betreiben zu können. Auch die Toleranzsicherheit wie auch die Fehlerverträglichkeit einer Brennstoffzelle kann dadurch erhöht werden.

Werden demzufolge - wie es wünschenswert ist - die Betriebsgase unter diesem erhöhten Druck, beispielsweise ca. 3,5 bar abs, der Brennstoffzelle zugeführt, geht damit auch eine notwendige Erhöhung des Schutzgasdruckes, beispielsweise auf über ca. 4,5 bar abs oder über ca. 5,0 bar abs, in dem Brennstoffzellendruckbehälter einher.

Wird so der Schutzgasdruck bzw. der Innendruck im Druckgasbehälter erhöht, ist - bei baugleichen Druckgasbehältern - mit weitergehenden Verformungen, wie starken Auswölbungen der Seitenwände des Druckbehälters, zu rechnen. Der Druckgasbehälter würde sich aufblähen.

Infolgedessen kann es zu (irreversiblen) Schädigungen, wie plastischen Verformungen und/oder Rissen, an dem Druckgasbehälter kommen, was das Schutzkonzept zunichte macht und ein Austreten der zündfähigen bzw. brennbaren Betriebsgase in die Umgebung ermöglicht.

Der Erfindung liegt die Aufgabe zugrunde, die Nachteile im Stand der Technik zu verbessern und es zu ermöglichen, eine Brennstoffzelle unter höheren Betriebsdrücken sicher zu betreiben.

Die Aufgabe wird durch ein Aufnahmegestell mit einem Brennstoffzellendruckbehälter mit den Merkmalen gemäß dem unabhängigen Patentanspruch gelöst.

Die Erfindung geht aus von einem Aufnahmegestell mit einem durch eine Aufnahmevorrichtung in dem Aufnahmegestell aufgenommenen Brennstoffzellendruckbehälter.

Um durch Druckerhöhungen in dem Brennstoffzellendruckbehälter Schädigungen desselben zu verhindern, sieht die Erfindung vor, dass die Aufnahmevorrichtung verstellbare Anschlagelemente aufweist.

Diese Anschlagelemente sind derart verstellbar an dem Aufnahmegestell angeordnet, dass durch deren Verstellung jeweils ein vorgebbarer Abstand des jeweiligen Anschlagelements zu einer Seitenwand des Brennstoffzellendruckbehälters einstellbar ist und bei einem Kontakt des Anschlagelements mit der Seitenwand eine durch einen Druck in dem Brennstoffzellendruckbehälter bewirkbare Verformung der Seitenwand blockiert wird.

"An dem Aufnahmegestell angeordnet" meint hierbei, dass sich das Anschlagelement - bei Belastung - an dem Aufnahmegestell abstützt und so Kräfte über das Anschlagelement in das Aufnahmegestell eingeleitet und durch dieses aufgenommen werden.

Unter "blockiert" kann bei der Erfindung verstanden werden, dass - sobald ein Kontakt zwischen dem Anschlagelement und der Seitenwand gegeben ist - eine (weitere) innendruckbedingte Verformung, insbesondere ein Auswölben, der Seitenwand verhindert wird. Vereinfacht und anschaulich ausgedrückt, das Anschlagelement wirkt als die Verformung begrenzender Anschlag.

Dass die Aufnahmevorrichtung, mittels welcher der Brennstoffzellendruckbehälter in dem Aufnahmegestellt aufgenommen ist, die verstellbaren Anschlagelemente aufweist, meint, dass zumindest diese Anschlagelemente Teil der Aufnahmevorrichtung sind. Diese Anschlagelemente können ausschließlich die Aufnahmevorrichtung bilden - oder zusammen mit weiteren "Aufnahme-Elementen", wie Schienen, Leisten, Halterungen, Rahmenteilen u.ä., die Aufnahmevorrichtung bilden.

Je nach konkreter Ausgestaltung eines solchen Anschlagelements, beispielsweise eine Einstellschraube, eine Anschlagsleiste, eine Anschlagsschiene oder ein Verspannbacken, kann der Kontakt zwischen dem Anschlagelement und der Seitenwand als (idealisierter) Punkt-, Linien- oder Flächenkontakt ausgebildet sein.

Grundsätzliche mathematische Modelle zur (Belastungs-)Berechnung solcher Punkt-, Linien- oder Flächenberührungen sind bekannt und können beispielsweise durch FE-Rechnungen angewandt werden.

Der Erfindung liegt die Überlegung zu Grunde, dass die durch eine betriebsgasdruckerhöhungsbedingte Innendruckerhöhung bei dem Druckbehälter erzeugten, erhöhten Seitenwandbelastungen bzw. Seitenwandkräfte mittels der in dem Rack angeordneten bzw. dort abgestützten Anschlagelemente von dem Rack aufgenommen bzw. über dieses via der Anschlagelemente abgeleitet werden können.

Demzufolge sieht die Erfindung diese verstellbaren, in dem Rack "verankerten" bzw. abgestützten Anschlagelemente vor, die - sobald der Kontakt zwischen einer Seitenwand des Druckbehälters und einem Anschlagelement hergestellt ist - die innendruckbedingten Kräfte aufnehmen.

Da auslegungsbedingt, d.h. material- und/oder dimensionierungsbedingt, die Seitenwände des Druckbehälters ein bestimmtes Maß an Belastungen und Kräfte aufnehmen und/oder bestimmte Verformungen bzw. druckbedingte, im elastische Bereich liegende Verwölbungen "aushalten" können, ohne dass hier Schädigungen an den Seitenwänden auftreten, sieht die Erfindung diese Verstellbarkeit bei den Anschlagelementen vor, mittels welcher eine "tolerierbare", unterhalb der "Schädigungsverformung" liegende Verformung, einstellbar ist bzw. darüber hinausgehende Verformung der Druckbehälterwände begrenzbar sind.

Anders ausgedrückt, durch Einstellung eines vorgebbaren Abstandes eines solchen verstellbaren Anschlagelements zu einer Seitenwand des Brennstoffzellendruckbehälters kann ein gewisses Maß an - unterhalb der Schädigungsgrenze liegende - Verformung/Verwölbung der Seitenwand zugelassen bzw. toleriert werden. Dieser vorgebbare Abstand und die zugelassene Belastung bzw. Verformung der Seitenwand kann beispielsweise über FE-Rechnungen oder auch empirisch ermittelt - und der Abstand entsprechend, gegebenenfalls unter Beachtung bestimmter Sicherheiten eingestellt - werden.

So kann beispielsweise - wollte man keinerlei Verformung einer Druckbehälterseitenwand zulassen - der Abstand auf einen Nullabstand eingestellt werden. D.h., das Anschlagelement kontaktiert in diesem Fall bereits ohne betriebsbedingten Innendruck die Seitenwand des Druckbehälters, so dass bei Aufbau des betriebsbedingten Innendrucks in dem Druckbehälter sofort die Aufnahme der Kräfte durch das Anschlagelement bzw. das Rack erfolgt. Kurz, ein Aufblähen des Druckbehälters wird an den gestützten Stellen verhindert und insgesamt stark reduziert.

Andererseits - wollte man größere Verformungen zulassen - kann der Abstand auch auf mehrere mm oder mehrere cm eingestellt werden. Sobald - durch innendruckbedingte Verformung bzw. Verwölbung der Seitenwand - die Seitenwand das Anschlagelement kontaktiert, wird die weitere Verformung bzw. Verwölbung der Seitenwand durch das Anschlagelement begrenzt bzw. blockiert, die Belastung und die auf die Seitenwand wirkenden Kräfte auf diesem Niveau begrenzt und darüber hinausgehend Kräfte von dem Anschlagelement und dem Rack aufgenommen.

Vereinfacht ausgedrückt, die Erfindung leitet ab einer einstellbaren, zulässigen und tolerierten Verformung die durch die Innendruckerhöhung bewirkten Kräfte über die Anschlagelemente und weiter über das Rack aus - und vermeidet dadurch eine höhere und gegebenenfalls zu Wandschäden führenden Belastung der Brennstoffzelle und/oder des Druckbehälters bzw. des Brennstoffzellenmoduls.

Sogar Vorspannungen in den Druckbehälterwänden lassen sich dadurch, d.h. durch die verstellbaren Anschlagelemente, - mit negativem Abstand des Anschlagelements - in den Druckbehälterwänden realisieren, um so ausreichenden, wünschenswerten Betriebsgasdruckerhöhungen und Erhöhungen der Schutzgasdrücke "Platz zu schaffen". D.h., das Anschlagelement verspannt bereits im "drucklosen" Zustand den Druckbehälter im Rack.

Die Erfindung erweist sich dahingehend von besonderem Vorteil, dass bisher verwendete und bei bisherigen (niedrigeren) Betriebsgasdrücken betriebene Brennstoffzellendruckbehälter unverändert, d.h. ohne bauliche bzw. konstruktive Änderungen an diesen, weiterverwendet werden können.

Durch einfache und kostengünstig zu realisierende Änderungen nur bzw. alleinig an den Brennstoffzellenmodulaufnahmevorrichtungen bzw. Racks lassen sich so durch die Erfindung Brennstoffzellen sicher mit höheren Betriebsgasdrücken fahren.

So kann durch die Erfindung insbesondere auf konstruktive, den Druckbereich bzw. die Druckresistenz erhöhenden Änderungen an der Brennstoffzelle und/oder an dem Brennstoffzellenmodul selbst, wie beispielsweise dickere Druckbehälterwände (Wandstärkenerhöhungen) und/oder Druckbehälter aus Materialien mit höheren E-Modulen (Materialänderungen) und/oder Druckbehälterwandversteifungen (Wandverstärkungen), verzichtet werden.

Solche sind - auf Grund einer komplexen und sicherheitsrelevanten Struktur bzw. Aufbaus der Brennstoffzelle bzw. des Brennstoffzellenmoduls und bei diesen einzuhaltenden (Sicher-heits-)Anforderungen - dort weit schwieriger und (kosten-) aufwendiger zu realisieren - als die erfindungsgemäß vorgesehen Änderungen am Rack. Auch würden solche Änderungen meist einhergehen mit einem erhöhtem Gewicht und/oder erhöhten Abmessungen der Brennstoffzellen bzw. der Brennstoffzellenmodule, was in weiterer Folge wieder auch Anpassungsänderungen an den die Brennstoffzellenmodule aufnehmenden Racks notwendig machen würde.

Die Erfindung stellt somit eine einfache und sichere Lösung für bei erhöhten Betriebsgasdrücken zu betreibenden, insbesondere für den mobilen Einsatz vorgesehenen, Brennstoffzellen zu Verfügung.

Die Erfindung ermöglicht demzufolge in einfacher und effizienter bzw. effektiver Weise eine Erhöhung des nutzbaren Druckbereichs eines Brennstoffzellendruckbehälters bzw. einer Brennstoffzelle.

Darüber hinaus erleichtert die Verstellbarkeit der Anschlagelemente auch die Aufnahme bzw. den Einschub des Brennstoffzellenmoduls in das Rack sowie eine exakte Positionierung des Brennstoffzellenmoduls in dem Rack.

Bevorzugte Weiterbildungen der Erfindung ergeben sich auch aus den abhängigen Ansprüchen.

Nach einer bevorzugten Weiterbildung sind die Anschlagelemente als Einstellschrauben ausgestaltet. Diese können mittels am Rack angebrachten, Gewinde aufweisenden Durchgangsbohrungen dort, beispielsweise in Profilen oder Streben oder Versteifungen, angeordnet und aufgenommen bzw. abgestützt werden.

Über eine Wahl einer vorgebbaren Gewindesteigung bei einer solchen Einstellschraube und entsprechend auch bei einer solchen Gewindebohrung kann die Einstellbarkeit bzw. eine Präzision bei der Verstellung und/oder ein Verstellweg der Einstellschraube flexibel und einfach eingestellt werden. Über Schraubendrehung wird dabei der Abstand zu der Druckbehälterseitenwand eingestellt und der Anschlag positioniert.

Insbesondere kann vorgesehen sein, eine Mehrzahl von solchen Einstellschrauben - angeordnet nach einer vorgebbaren Struktur, beispielsweise angeordnet in einer Linie oder in einer Gitterstruktur - zur Begrenzung der Verformung einer Seitenwand zu verwenden. Beispielsweise mittels FE-Rechnungen lassen sich dann so optimale Anordnungsstrukturen/Kontaktstrukturen für eine Seitenwand bzw. zu deren Verformungsbegrenzung ermitteln.

Nach einer weiteren bevorzugten Weiterbildung ist vorgesehen, ein solches Anschlagelement als Einstellleiste, Einstellschiene oder als Verspannbacken auszubilden. Eine solche Einstellleiste/-schiene bzw. ein solcher Verspannbacken kontaktiert und verspannt die Seitenwand über eine - entsprechend der nach der Einstellleiste/-schiene bzw. nach dem Verspannbacken realisierten Kontaktfläche ausgebildeten - Fläche und begrenzt so deren Verformung "flächiger" als es durch eine Einstellschraube möglich ist.

Nach einer weiteren bevorzugten Weiterbildung ist so - bei entsprechender Ausgestaltung des Anschlagelements - vorgesehen, dass der Kontakt ein Punkt-, Linien- oder Flächenkontakt ist.

Auch kann im Bereich des Kontakts des Anschlagelements an der Seitenwand dort eine Aufnahme für das Anschlagelement, beispielsweise eine Zentrierung und/oder Verrutschsicherung und/oder auch eine (Wand-)Verstärkung vorgesehen werden. Bevorzugt lassen sich nach einer Weiterbildung mehrere Anschlagelemente derart anordnen, dass diese mehreren Anschlagelemente im Fall ihrer Kontaktierung eine Seitenwand kontaktieren. Auch können mehrere Anschlagelemente derart angeordnet sein, dass diese mehreren Anschlagelemente im Fall ihrer Kontaktierung mehrere Seitenwände kontaktieren. Beliebige, spannungsoptimierte Positionierungsmuster bzw. Kontaktierungsmuster von Anschlagelementen an der bzw. an den Seitenwänden lassen sich so realisieren.

Nach einer besonders bevorzugten Weiterbildung ist vorgesehen, dass die mehreren Anschlagelemente nach einer auf die Seitenwand abbildbaren Struktur, insbesondere in einer Reihe oder in einer Gitterstruktur, angeordnet sind. Hierdurch können Spannungsspitzen in der Seitenwand verhindert werden.

Die Verstellung des Anschlagelements kann stufenlos, beispielsweise durch ein Gewinde, oder rasterartig oder gestuft, beispielsweise durch Sägezahnprofile, realisiert sein.

Auch kann vorgesehen sein, dass der vorgebbare Abstand ein Nullabstand ist oder dass der vorgebbare Abstand in einem Bereich von 0,1 mm bis 4 cm, insbesondere in einem Bereich von 1 mm bis 1,5 cm, eingestellt wird.

Bei einer weiteren bevorzugten Weiterbildung ist der Brennstoffzellendruckbehälter tonnenförmig oder als quaderförmiger Behälter, insbesondere mit ebenen Seitenwänden, ausgebildet. Dabei kann ein solcher Behälter mehrere mm starke Bleche - als Seitenwände - aufweisen. Auch Aluminiumbehälter sind möglich. Auch kann ein solcher Behälter durch Umformen, insbesondere durch Tiefziehen, von Blech- oder Aluminiumteilen und/oder durch Verschweißen und/oder Verlöten wie auch durch (Form-)Gießen von entsprechenden Gussstahlteilen hergestellt sein.

Nach einer bevorzugten Weiterbildung ist das Aufnahmegestell ein Brennstoffzellenrack, insbesondere ein Brennstoffzellen-Einschubgestell. Derartige Aufnahmegestelle sind - weil eine Verwendung von profilierten Standardteilen möglich sowie deren Aufbau zum Gestell einfach ist ― einfach und kostengünstig zu realisieren.

Weiter kann vorgesehen sein, dass - bei Betrieb der Brennstoffzelle unter erhöhten Betriebsgasdrücken bzw. erhöhtem Schutzgasdruck - ein zulässiger Maximaldruck in dem Brennstoffzellendruckbehälter über ca. 4,5 bar abs, beispielsweise über 5,0 bar abs, und/oder dass der Druck in dem Brennstoffzellendruckbehälter zwischen 1,05 bar abs und 4,5 bar abs liegt.

Insbesondere kann der Druck durch ein Schutzgas, welches eine Schutzgashülle um eine in dem Brennstoffzellendruckbehälter angeordnet Brennstoffzelle ausbildet, bewirkt werden.

So kann beispielsweise die Brennstoffzelle mit Betriebsgasdrücken von über 3 bar abs, insbesondere in einem Bereich von ca. 3,5 bar abs bis ca. 4 bar abs, betrieben werden. Der entsprechend angepasste Schutzgasdruck - zur Realisierung eines entsprechenden Schutzkonzeptes - kann hier in einem Bereich von ca. 4,5 bar abs bis 5,5 bar abs, insbesondere von ca. 5,0 bar abs, aufgebaut sein.

Nach einer weiteren bevorzugten Weiterbildung ist vorgesehen, dass das Aufnahmegestell in einer stationären oder mobilen Anwendung, insbesondere bei einem Fahrzeug, wie einem Kraftfahrzeug, einem Schiff oder einem U-Boot, eingesetzt wird.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Die Erfindung ist jedoch nicht auf die in den Ausführungsbeispielen angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht werden.

Es zeigen:
- FIG 1: eine erste Ansicht eines Brennstoffzellendruckbehälters bzw. eines Brennstoffzellenmoduls (BZModul) gemäß einem ersten Ausführungsbeispiel,
- FIG 2: eine zweite Ansicht des Brennstoffzellendruckbehälter bzw. des Brennstoffzellenmoduls (BZ-Modul) gemäß dem ersten Ausführungsbeispiel,
- FIG 3: ein Brennstoffzellenrack mit darin aufgenommenem Brennstoffzellenmodul in einer Ansicht gemäß einem zweiten Ausführungsbeispiel,
- FIG 4: das Brennstoffzellenrack mit darin aufgenommenem Brennstoffzellenmodul in zweiten Ansicht gemäß dem zweiten Ausführungsbeispiel,
- FIG 5: das Brennstoffzellenrack mit darin aufgenommenem Brennstoffzellenmodul ohne Druck in dem Brennstoffzellenmodul gemäß dem zweiten Ausführungsbeispiel,
- FIG 6: das Brennstoffzellenrack mit darin aufgenommenem Brennstoffzellenmodul mit Druck in dem Brennstoffzellenmodul gemäß dem zweiten Ausführungsbeispiel und
- FIG 7: ein weiteres Haltesystem mit darin aufgenommenem Brennstoffzellenmodul gemäß einem dritten Ausführungsbeispiel.

FIGen 1 und 2 zeigen in zwei Ansichten jeweils einen Brennstoffzellendruckbehälter 1, in welchem eine Wasserstoff-Sauerstoff-Brennstoffzelle 2 (kurz nur Brennstoffzelle) unter einem Schutzgasmantel/Schutzgashülle 3 angeordnet ist.

Wie FIGen 1 und 2 zeigen ist der Brennstoffzellendruckbehälter 1 (zusammen mit der darin angeordneten Brennstoffzelle kurz im Folgenden auch nur als Brennstoffzellenmodul (BZ-Modul) 4 bezeichnet) als quaderförmiger Behälter 1 mit im Wesentlichen sechs ebenen, rechtwinklig zueinander angeordneten Seitenwänden 5 - 10 ausgebildet.

Wie FIGen 1 und 2 weiter zeigen bilden vier 5 - 8 der Seitenwände 5 - 10 die seitliche Begrenzungen des Brennstoffzellendruckbehälter 1 bzw. des BZ-Moduls 4, während zwei 9, 10 der Seitenwände 5 - 10 einen Boden 9 und einen Deckel 10 des Brennstoffzellendruckbehälter 1 bzw. des BZ-Moduls 4 bilden. Die vier, die seitlichen Begrenzungen bildenden Seitenwände 5 - 8, der Boden 9 und der Deckel 10 sind jeweils senkrecht zueinander angeordnet, so dass sich dadurch die quaderförmige Form des Brennstoffzellendruckbehälters 1 ausbildet.

Zur Versorgung der Brennstoffzelle 2 mit Betriebsgasen, hier Wasser- und Sauerstoff, sowie des Brennstoffzellendruckbehälters 1 mit Schutzgas, hier Stickstoff, ist an dem Boden 9 des BZ-Moduls 4 ein Anschlussbereich 11 mit Anschlüssen (nicht dargestellt) angeordnet.

Über die Anschlüsse werden die Betriebsgase - im Betrieb der Brennstoffzelle 2 - unter einem - im Vergleich zu bisherigen BZ-Modulen - erhöhten Druck von 3,8 bar abs in die Brennstoffzelle 2, das Schutzgas unter einem - ebenfalls erhöhtem - Druck von 5,0 bar abs in den Brennstoffzellendruckbehälter 1 eingeblasen (Erhöhung des nutzbaren Druckbereichs des BZ-Moduls 4).

Diese Brennstoffzelle 2 bzw. dieses BZ-Modul 4 ist für einen mobilen Einsatz, nämlich in einem Schiff oder einem U-Boot, - zu dessen Energie- bzw. Stromversorgung ― vorgesehen.

Um eine sichere Positionierung und Verstauung der Brennstoffzelle 2 bzw. des BZ-Moduls 4 in dem Schiff bzw. U-Boot - bei Nutzung dieser 2 bzw. dieses 4 - bei dem erhöhten Druckbereich - zu gewährleisten, ist ein spezielles Aufnahmegestell 20, kurz nur Rack 20, für das BZ-Modul 4 vorgesehen.

Um den nutzbaren Druckbereich des BZ-Moduls 4 zu erhöhen bzw. um die Brennstoffzelle 2 unter dem erhöhten Betriebsdruck von ca. 3,8 bar abs bzw. unter dem erhöhtem Schutzgasdruck von ca. 5,0 bar abs sicher zu betreiben, weist dieses spezielle Rack 20 ein entsprechend spezielles, anhand der weiteren FIGen 3 bis 7 - bei dortigen zwei verschiedenen Ausführungen - verdeutlichtes Haltesystem bzw. spezielle Verspannvorrichtung 21 (Aufnahmevorrichtung) zur Aufnahme bzw. Einschub und Verspannung des BZ-Moduls im Rack 20 auf.

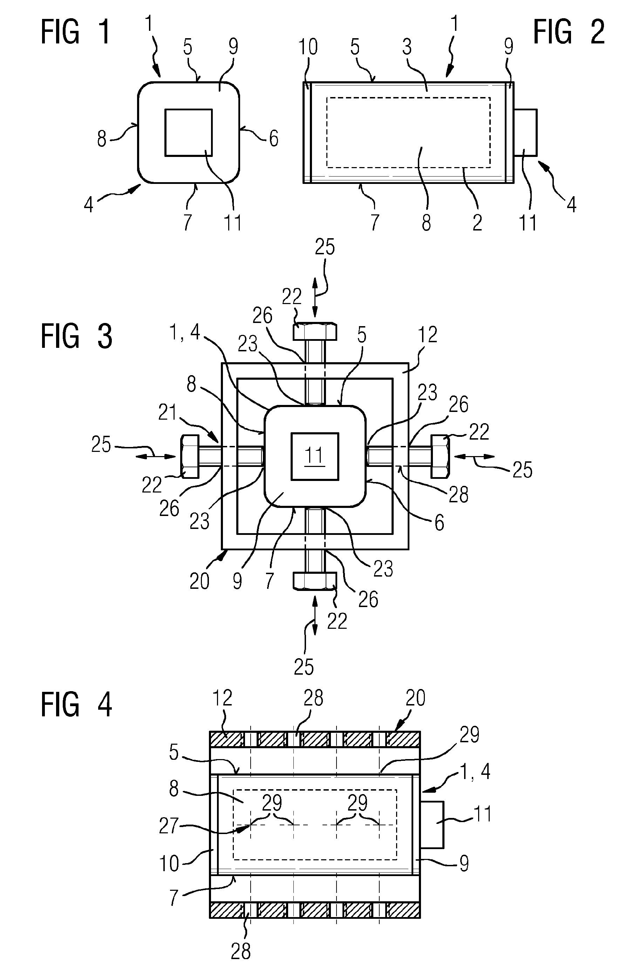

Wie FIGen 3 - 6 zeigen bzw. verdeutlichen, weist das Rack 20 nach dortiger Ausgestaltung mindestens vier, an dem Rack sich abstützende Druckschrauben 22 für jede der vier seitlichen Seitenwände 5 - 8 des Brennstoffzellendruckbehälters 1 auf. Hinter den sichtbaren Druckschrauben 22 können sich weitere befinden, wie in FIG 4 als Gewinde in den Profilen 12 gezeigt.

Diese vier Druckschrauben 22 pro Seitenwand 5, 6, 7 oder 8 sind jeweils in Reihe - bei annähernd gleichem Abstand zwischen diesen - längs der jeweiligen Seitenwand 5, 6, 7 oder 8 in etwa in deren Mitte über die Seitenwand 5, 6 7, oder 8 verteilt.

In dem Rack 20 sind entsprechende Gewindebohrungen 28 - in dortigen Profilen 12 bzw. Verstrebungen 12 - eingebracht, in welche die Druckschrauben 22 eingeschraubt werden und über welche sich die Druckschrauben 22 - bei Belastung - an dem Rack 20 abstützen.

Über ein entsprechend tiefes Einschrauben - in Verstellrichtung 25 - einer solchen Druckschraube 22 in ihre jeweiligen Gewindebohrung 28 im Rack 20 lässt sich so ein vorgebbarer Abstand 23 (Anschlagsbegrenzung) der Druckschraube 22 zur Seitenwand 5, 6, 7 oder 8 des Brennstoffzellendruckbehälters 1 realisieren.

FIG 4 verdeutlicht ein Kontaktmuster 27, welches durch die vier Druckschrauben 22 auf der jeweiligen Seitenwand 5, 6, 7 oder 8 bei deren Kontaktierung entsteht. Nach Ausgestaltung der Anschläge - hier als Druckschrauben 22 - bilden sich wie FIG 4 verdeutlicht ein (idealisierter) Kontaktpunkt 29 bei Anschlag der Seitenwand 5, 6, 7 oder 8 an einer Druckschraube 22 auf der Seitenwand 5, 6, 7 oder 8 aus.

In dieser FIG 4 sind vor und hinter der Zeichenebene noch jeweils eine Leiste 12 erforderlich (nicht gezeigt). FIG 4 ist ein Schnitt von FIG 3. Damit sind zusammen 16 Druckschrauben 22 in dieser Ausführung nötig.

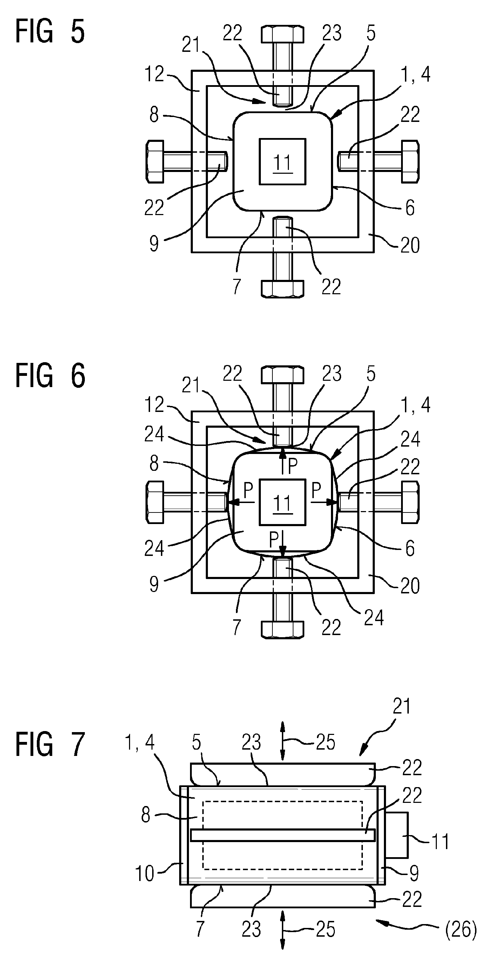

FIG 5 zeigt das BZ-Modul 4 bzw. den Brennstoffzellendruckbehälter 1 nach Einschieben in das Rack 20 noch ohne Beaufschlagung des BZ-Moduls mit den vorgesehenen, erhöhten Betriebsdrücken bzw. dem erhöhtem Schutzgasdruck.

Wie FIG 5 verdeutlicht sind die Seitenwände 5 - 8 des Brennstoffzellendruckbehälters 1 noch eben, d.h. sie wölben sich noch nicht unter dem erhöhten Innendruck im BZ-Modul 4. Die Einstellschrauben 22 weisen wie FIG 5 verdeutlicht noch so den voreingestellten Abstand 23 zu den Seitenwänden 5 - 8 auf.

Nach erfolgtem Einschieben des BZ-Moduls 4 in das Rack 20 und in Betriebnahme des BZ-Moduls, d.h. mit Zuführung der Gase unter Druck, beulen sich die vormals ebenen Seitenflächen 5 - 8 des Brennstoffzellendruckbehälters 1 aus.

Die Ausbeulung - unter dem Innendruck in dem Brennstoffzellendruckbehälter 4 - erfolgt wie FIG 6 verdeutlicht solange, bis die Seitenwände 5 - 8 des Brennstoffzellendruckbehälters 1 an den Einstellschrauben 22 anschlagen - und die weitere Ausbeulung/Verformung bzw. Verwölbung 24 der Seitenwände 5 - 8 blockiert bzw. verhindert wird.

Die Einstellschrauben 22 nehmen hier die weiteren Kräfte aus dem erhöhten Innendruck auf, die den Brennstoffzellendruckbehälter 1 weiter ausbeulen würden - und leiten diese durch die Abstützung der Druckschrauben 22 im Rack 20 in das Rack 20 ein.

Die Verformung 24 der Seitenwände 5 - 8 wird somit auf ein erlaubtes Maß, nämlich den voreingestellten Abstand 23, beschränkt, Materialspannungen in den Seitenwänden 5 - 8 auf ein erlaubtes Maß begrenzt und diese damit in einem zulässigen Toleranzbereich gehalten. Darüber hinausgehende Spannungen in den Seitenwänden 5 - 8 bzw. diese verursachende Kräfte werden von dem Rack 20 aufgenommen.

Anders ausgedrückt, der Brennstoffzellendruckbehälter 1, der sich wie die FIGen 5 und 6 zeigen beim Aufbringen der erhöhten Betriebsdrücke bzw. Schutzgasdrucks aufbläht und dadurch in seinen Seitenwänden 5 - 8 unzulässig hohe Spannungen verursachen würde, wird - unter Duldung einer bestimmten, durch den Abstand 23 bestimmten Toleranz - am weiteren Aufblähen gehindert. Dadurch werden die unzulässig hohen Spannungen, die zu Schäden an den Seitenwänden 5 - 8 führen könnten, verhindert. Die Einstellschrauben 22 leiten die unzulässig höheren Kräfte aus dem Innendruck in das Rack 20 ab.

Entsprechende, diesen Toleranzbereich ermittelnde, Berechnungen wurden mittels entsprechender FE-Modellierung durchgeführt und dadurch optimierte Kontaktmuster 27 und voreinstellbare Abstände 23 ermittelt.

Demzufolge wird durch dieses spezielle Rack 20, d.h. alleine mit dortigem Haltesystem bzw. Verspannvorrichtung 21, die Erhöhung des nutzbaren Druckbereichs des Brennstoffzellendruckbehälters 1 erreicht - ohne dass Modifikationen an dem Brennstoffzellendruckbehälter 1, an der Brennstoffzelle 2 und/oder an dem BZ-Modul 4 notwenig sind.

FIG 7 zeigt eine weitere Ausgestaltung des Haltesystems bzw. Verspannvorrichtung 21 zur Aufnahme und Verspannung des BZ-Moduls 4 in dem Rack 20.

Wie FIG 7 zeigt, werden hier vier verstellbare Druckleisten 22 - ähnlich wirkend wie Verspannbacken - im Rack 20 (nicht dargestellt) angeordnet, welche ein Ausbeulen der Seitenwände 5 - 8 des Brennstoffzellendruckbehälters 1 verhindern.

Jede dieser vier Druckleisten 22 ist für eine ihr zugeordneten Seitenwand 5, 6, 7, oder 8 vorgesehen und liegt bereits vor Versorgung des BZ-Moduls 4 mit den erhöhten Betriebsgasdrücken bzw. Gasdrücken längs an der jeweiligen Seitenwand 5, 6, 7 oder 8 an bzw. verspannt bereits vor Versorgung des BZ-Moduls mit den erhöhten Betriebsgasdrücken bzw. Gasdrücken das BZ-Modul 4.

Über die Verstelleinrichtung 26 (in FIG 7 nicht dargestellt), welche die Verstellung bzw. Verschiebung der Druckleisten 22 in der gezeigten Verstellrichtung 25 erlaubt, werden die Druckleisten 22 in dem Rack 20 abgestützt.

D.h., hier wird keine Verformung 24 der Seitenwände 5 - 8 des Brennstoffzellendruckbehälters 1 toleriert (voreinstellbarer Abstand 23 ist Null bzw. Nullabstand) - und alle bei Aufbringen der Betriebsdrücke entstehenden Kräfte werden sofort in das Rack 20 eingeleitet. Kurz, die Druckleisten 22 nehmen die Kräfte auf, die den Brennstoffzellendruckbehälter 1 aufblähen würden.

Auch hier wird damit durch dieses Rack 20 mit dortigem Haltesystem bzw. Verspannvorrichtung 21 die Erhöhung des nutzbaren Druckbereichs des Brennstoffzellendruckbehälters 1 erreicht - ohne dass Modifikationen an dem Brennstoffzellendruckbehälter und/oder an dem BZ-Modul 4 notwendig sind.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Aufnahmegestell (20) mit einem durch eine Aufnahmevorrichtung (21) in dem Aufnahmegestell (20) aufgenommenen Brennstoffzellendruckbehälter (1),
**dadurch gekennzeichnet, dass**
die Aufnahmevorrichtung (21) Anschlagelemente (22) aufweist, welche an dem Aufnahmegestell (20) derart verstellbar angeordnet sind, dass durch deren Verstellung (25) jeweils ein vorgebbarer Abstand (23) des jeweiligen Anschlagelements (22) zu einer Seitenwand (5, 6, 7, 8) des Brennstoffzellendruckbehälters (1) einstellbar ist und dass bei einem Kontakt (27, 29) des jeweiligen Anschlagelements (22) mit der Seitenwand (5, 6, 7, 8) eine durch einen Druck in dem Brennstoffzellendruckbehälter (1) bewirkbare Verformung (24) der Seitenwand (5, 6, 7, 8) blockiert wird.

2. Aufnahmegestell (20) nach mindestens einem der voranstehenden Ansprüche,
**dadurch gekennzeichnet, dass**
das Anschlagelement (22) eine Einstellschraube, eine Einstellleiste, eine Einstellschiene oder ein Verspannbacken ist.

3. Aufnahmegestell (20) nach mindestens einem der voranstehenden Ansprüche,
**dadurch gekennzeichnet, dass**
dass der Kontakt (29) ein Punkt-, Linien- oder Flächenkontakt ist.

4. Aufnahmegestell (20) nach mindestens einem der voranstehenden Ansprüche,
**dadurch gekennzeichnet, dass**
mehrere Anschlagelemente (22) derart angeordnet sind, dass diese mehreren Anschlagelemente (22) im Fall ihrer Kontaktierung (27, 29) eine Seitenwand (5, 6, 7, 8) des Brennstoffzellendruckbehälters (1) kontaktieren (27, 29) und/oder dass mehrere Anschlagelemente (22) derart angeordnet sind, dass diese mehreren Anschlagelemente (22) im Fall ihrer Kontaktierung (27, 29) mehrere Seitenwände (5, 6, 7, 8) des Brennstoffzellendruckbehälters (1) kontaktieren (27, 29).

5. Aufnahmegestell (20) nach mindestens einem der voranstehenden Ansprüche,
**dadurch gekennzeichnet, dass**
die mehreren Anschlagelemente (22) nach einer auf die Seitenwand (5, 6, 7, 8) des Brennstoffzellendruckbehälters (1) abbildbaren Kontaktstruktur (27), insbesondere in einer Reihe oder in einer Gitterstruktur, angeordnet sind.

6. Aufnahmegestell (20) nach mindestens einem der voranstehenden Ansprüche,
**dadurch gekennzeichnet, dass**
die Verstellung (25) des Anschlagelements (22) stufenlos oder rasterartig erfolgt.

7. Aufnahmegestell (20) nach mindestens einem der voranstehenden Ansprüche,
**dadurch gekennzeichnet, dass**
der vorgebbare Abstand (23) ein Nullabstand ist oder dass der vorgebbare Abstand (23) in einem Bereich von 0,1 mm bis 4 cm, insbesondere in einem Bereich von 1 mm bis 1,5 cm, eingestellt wird.

8. Aufnahmegestell (20) nach mindestens einem der voranstehenden Ansprüche,
**dadurch gekennzeichnet, dass**
der Brennstoffzellendruckbehälter (1) tonnenförmig oder als quaderförmiger Behälter (1), insbesondere mit ebenen Seitenwänden (5, 6, 7, 8), ausgebildet ist.

9. Aufnahmegestell (20) nach mindestens einem der voranstehenden Ansprüche,
**dadurch gekennzeichnet, dass**
ein zulässiger Maximaldruck in dem Brennstoffzellendruckbehälter (1) über 4,5 bar abs liegt und/oder dass der Druck in dem Brennstoffzellendruckbehälter (1) zwischen 1,05 bar abs und 4,5 bar abs liegt.

10. Aufnahmegestell (20) nach mindestens einem der voranstehenden Ansprüche,
eingesetzt in einer stationären oder mobilen Anwendung, insbesondere bei einem Fahrzeug.
